# EUROPÄISCHE PATENTSCHRIFT

(11) **EP 4 093 637 B1**
(45) Veröffentlichungstag und Bekanntmachung des Hinweises auf die Patenterteilung: **12.02.2025**
(21) Anmeldenummer: 21824510.8
(22) Anmeldetag: 30.11.2021
(51) Int. Cl.: B60P 3/40, F03D 13/40

(54) **TRANSPORTFAHRZEUG FÜR LANGE LASTEN**
TRANSPORT VEHICLE FOR LONG LOADS
VÉHICULE DE TRANSPORT DE CHARGES LONGUES

(30) Priorität: 15.04.2021 DE 202021001376 U; 02.08.2021 DE 102021120031; 10.09.2021 DE 102021123505
(43) Veröffentlichungstag der Anmeldung: 30.11.2022
(73) Patentinhaber: HPL-Neugnadenfelder Maschinenfabrik GmbH, 49824 Ringe/Neugnadenfeld (DE)
(72) Erfinder: MOSS, Daniel, 48527 Nordhorn (DE)
(74) Vertreter: Schleitzer, Dirk-Karsten
(86) Internationale Anmeldenummer: PCT/EP2021/083501
(87) Internationale Veröffentlichungsnummer: WO 2022/218561

(56) Entgegenhaltungen:
- WO-A1-2019/229668
- CN-A- 112 757 997
- CN-A- 112 757 998
- DE-B4- 102012 004 169
- JP-A- 2013 071 511

## Beschreibung

Die Erfindung betrifft ein Transportfahrzeug für ein längliches Objekt mit Überlänge, insbesondere für ein Rotorblatt einer Windturbine oder ein Turmsegment, mit einer auf einer Ladeplattform des Transportfahrzeugs angeordneten Transporteinrichtung zur Halterung des Objekts während des Transports, mit einer ersten Dreheinrichtung zur Änderung des Aufstellwinkels des an der Transporteinrichtung gehaltenen Objekts und mit einer zweiten Dreheinrichtung zum Schwenken der Transporteinrichtung um eine vertikale Achse, wobei wenigstens ein verstellbares Ballastgewicht und eine Verstelleinrichtung zur Positionsverstellung des Ballastgewichts vorgesehen sind und wobei die Verstelleinrichtung auf der Transporteinrichtung angeordnet und zusammen mit der Transporteinrichtung drehbar ist.

Bei dem erfindungsgemäßen Transportfahrzeug kann darüber hinaus eine an sich bekannte weitere Dreheinrichtung zur Drehung eines transportierten Objekts um seine Längsachse vorgesehen sein, um eine günstige Windumströmung des Objekts beim Transport zu gewährleisten.

Dabei kann das Transportfahrzeug ein motorisch angetriebenes Schwerlastfahrzeug oder auch ein passiv nachlaufendes Schwerlastfahrzeug sein, beispielsweise ein Schwerlastanhänger oder wie es im Anhang XI zur EG-Richtlinie 2007-46-EG in der Fassung vom 15.07.2011 heißt, ein "Anhänger für Schwerlasttransporte", also gemäß der dort gegebenen Definition dieses Begriffs ein Fahrzeug der Klasse O4 für den Transport von teilbaren oder unteilbaren Ladungen, insbesondere Rotorflügeln von Windkraftanlagen, die aufgrund ihrer Abmessungen Geschwindigkeits- und Verkehrsbeschränkungen unterliegen, wobei hierzu auch hydraulische modulare Anhänger zählen, unabhängig von der Anzahl der Achsen und Module. Ferner ist festzuhalten, dass auch bei einem motorisch angetriebenen Schwerlastfahrzeug nicht jede der Achsbaugruppen motorisch angetrieben zu sein braucht.

Darüber hinaus umfasst der Begriff "Transportfahrzeug" im Sinne der Erfindung insbesondere solche Schwerlastfahrzeuge, bei denen die Last, für die jede einzelne Achsbaugruppe ausgelegt ist, einen Wert von mindestens 4 t, vorzugsweise mindestens 6 t, aufweist.

Rotorblätter sind empfindlich und können extreme Längen aufweisen, wobei der Trend zu immer größeren Anlagen geht. Die Rotorblattlängen können 60 m und bis zu 80 m oder mehr betragen. Mittels Rotorblattadaptern lassen sich Rotorblätter auf Plattformwagen montieren und mit diesen, bis zum einem Winkel von 60°, 70° oder mehr, aufgestellt, geschwenkt und um ihre eigene Achse gedreht transportieren. Montiert auf Schnellwechselplatten sind Rotorblätter so sicher aufgenommen und können an Hindernissen vorbeimanövriert werden. In bewaldeten oder bebauten Gebieten, in engen Kehren oder im Gebirge ist ein Transport der Rotorblätter zum Zielort möglich.

Ein Transportfahrzeug der gattungsgemäßen Art ist aus der JP 2013-071511 A bekannt. Das bekannte Transportfahrzeug weist eine als Drehgestell ausgebildete Transporteinrichtung zur Halterung eines Rotorblatts einer Windturbine während des Transports auf. Die Transporteinrichtung ist auf eine Ladeplattform des Transportfahrzeugs montiert. Beim Transport ist das Rotorblatt an einem Rotorblattadapter der Transporteinrichtung gehalten und lässt sich mit einer ersten Dreheinrichtung zur Änderung der Neigung der Längsachse des Rotorblatts relativ zur Horizontalachse aufschwenken, so dass das Rotorblatt mit einem bestimmten Aufstellwinkel transportiert werden kann. Beim Aufstellen besteht die Möglichkeit, das Rotorblatt um beispielsweise bis zum 60° aufzurichten, um die Manövrierfähigkeit des Transportfahrzeugs in Abhängigkeit von den straßenbaulichen Gegebenheiten zu gewährleisten. Im Übrigen besteht bei dem bekannten Transportfahrzeug auch die Möglichkeit, durch Drehen des Rotorblattadapters das Rotorblatt um seine Längsachse zu drehen, um in Abhängigkeit von den beim Transport herrschenden Windverhältnissen eine optimierte Umströmung des Rotorblatts bei geringen Strömungswiderständen zu realisieren.

Das aus der JP 2013-071511 A bekannte Transportfahrzeug weist darüber hinaus eine zweite Dreheinrichtung zur Drehung der Transporteinrichtung um eine vertikale Achse auf, was ein seitliches Schwenken des Rotorblatts relativ zur Fahrzeuglängsachse zulässt. Zum Passieren von Hindernissen, wie beispielsweise Oberleitungen oder sonstigen Bauwerken, oder auch beim Passieren von bestimmten straßenbaulichen Gegebenheiten besteht so die Möglichkeit, das Rotorblatt zu der Seite hin zu schwenken und die Manövrierfähigkeit des bekannten Transportfahrzeugs weiter zu verbessern. Dies betrifft insbesondere den Fall, wenn das Rotorblatt mit einem bestimmten Aufstellwinkel transportiert werden muss.

Die WO 2019/229668 A1 offenbart ein Güterfahrzeug mit einem Fahrgestell mit mindestens einer Ladefläche, mehreren lenkbaren Schlitten unterhalb der Ladefläche sowie einer vom Fahrgestell getragenen Stützvorrichtung für die zu transportierende Last.

Die DE 10 2012 004 169 B4 offenbart ein Schwerlasttransportfahrzeug mit einer Trägereinheit, auf der eine schwenkbare Halterung zur Anbindung eines Rotorblatts angebunden ist.

Im Übrigen sind aus dem Stand der Technik Transportfahrzeuge für längliche Objekte mit Überlänge bekannt, die ein Ballast- oder Kontergewicht aufweisen, um das Kipprisiko beim Transport zu verringern und eine hohe Kippstabilität des Fahrzeugs bei Kurvenfahrt oder wenn sich das Fahrzeug am Hang oder auf weichem Untergrund befindet zu gewährleisten. Die Bedingungen beim Kippen sind sehr unterschiedlich und hängen von der Schräglage des Untergrunds, der Tragfähigkeit sowie der Konstruktion des Fahrzeugaufbaus ab. Um eine hohe Kippstabilität zu erreichen, sehen bekannte Transportfahrzeuge beispielsweise stationär angeordnete Kontergewichte am hinteren Teil des Fahrzeugs vor.

Aufgabe der vorliegenden Erfindung ist es, ein Transportfahrzeug der eingangs genannten Art, insbesondere zum Transport von Rotorblättern von Windturbinen oder von Windturmsegmenten, zur Verfügung zu stellen, das zum Transport hoher Lasten geeignet und eine sehr gute Manövrierfähigkeit für den Transport bei beengten Platz- bzw. Straßenbauverhältnissen und insbesondere an Hindernissen, wie Oberleitungen, vorbei bietet und sich durch eine erhöhte Stand- bzw. Kippsicherheit und einen gewichtsreduzierten und kompakten Aufbau auszeichnet.

Die obige Aufgabe wird durch ein Transportfahrzeug mit den Merkmalen von Patentanspruch 1 bzw. Patentanspruch 2 gelöst. Vorteilhafte Ausgestaltungen sind Gegenstand der Unteransprüche.

Zur Lösung der vorgenannten Aufgabe werden bei einem Transportfahrzeug der eingangs genannten Art erfindungsgemäß wenigstens ein verstellbares Ballastgewicht und eine Verstelleinrichtung zur Positionsverstellung des Ballastgewichts vorgesehen. Die Positionsverstellung erfolgt relativ zu einem an der Transporteinrichtung gehaltenem Objekt und/oder relativ zur Drehachse der Transporteinrichtung. Durch die mit einer Positionsverstellung des Ballastgewichts verbundene Änderung der Schwerpunktkoordinaten bzw. der Position des Massenmittelpunkts des Ballastgewichts lässt sich gezielt die Lage der Schwerpunktkoordinaten bzw. der Position des Massenmittelpunkts des Transportfahrzeugs beeinflussen und in einen Bereich verschieben, in dem eine hohe Stand- bzw. Kippsicherheit des Transportfahrzeugs gewährleistet ist. Durch die Verstellung des Ballastgewichts am Transportfahrzeug lassen sich eine erhöhte Stand- bzw. Kippsicherheit des Transportfahrzeugs beim Transport des an der Transporteinrichtung gehaltenen Objekts insbesondere bei großen Aufstellwinkeln des Objekts und bei beengten Platz- bzw. Straßenbauverhältnissen erreichen und eine sehr gute Manövrierfähigkeit des Transportfahrzeuges sicherstellen. Die Bedingungen beim Kippen des Fahrzeuges sind dabei unterschiedlich. Sie hängen unter anderem von der Schräglage des Untergrunds, der Tragfähigkeit sowie der Konstruktion des Aufbaus des Transportfahrzeugs ab.

Zur Positionsverstellung kann insbesondere eine Steuereinrichtung vorgesehen sein, die eine automatische Verstellung der Lage des Ballastgewichts zulässt. Eingangsgrößen der Steuerung können von einem Fahrzeugführer des Transportfahrzeugs eingegebene Steuersignale und/oder Rückmeldesignale von Positions- und/oder Bewegungssensoren sein, die beispielsweise die Position des Ballastgewichts und/oder die Bewegung des Ballastgewichts erfassen. Unterschiedliche Verstellwege des Ballastgewichts für zu transportierende Objekte mit unterschiedlicher Dimensionierung, Geometrie und/oder Masse, und/oder für unterschiedliche Ballastgewichte können in einer Steuerungssoftware hinterlegt und/oder gespeichert sein.

Auch eine Regelung der Verstellung der Lage des Ballastgewichts, insbesondere in Abhängigkeit von Positionsdaten des an dem Transportfahrzeug gehaltenen Objekts, ist grundsätzlich nicht ausgeschlossen und mit einer geeignet ausgebildeten Regelungseinrichtung und unter Verwendung einer geeigneten Sensoreinrichtung möglich.

Die vorhergehenden oder nachfolgenden Ausführungen zur Positionsverstellung des Ballastgewichts betreffen insbesondere die Steuerung- oder Regelung der automatischen Positionsverstellung mit einer daran angepassten bzw. entsprechend programmierten Steuerungs- und/oder Regelungseinrichtung und können Gegenstand eines entsprechenden Steuerungs- und/oder Regelungsverfahrens zur automatischen Positionsverstellung eines Ballastgewichts an einem Fahrzeug der erfindungsgemäßen Art sein.

Besonders bevorzugt erfolgt eine Positionsverstellung des Ballastgewichts in Abhängigkeit vom Aufstellwinkel des an der Transporteinrichtung gehaltenen Objekts.

Mit Änderung des Aufstellwinkels ändert sich auch die Lage des der Schwerpunktkoordinaten bzw. der Position des Massenmittelpunkts des an der Transporteinrichtung gehaltenen Objekts. Um eine hohe Kippstabilität des Fahrzeugs zu erreichen, sieht daher die Erfindung eine Lageänderung der Schwerpunktkoordinaten bzw. der Position des Massenmittelpunkts des Ballastgewichts vor, wenn der Aufstellwinkel des Objekts geändert wird. Bei unterschiedlichen Aufstellwinkeln und/oder bei unterschiedlich dimensionierten Objekten, unterschiedlichen Objektmassen und/oder unterschiedlichen Objektgeometrien können daran angepasste unterschiedliche Verstellwege des Ballastgewichts vorgesehen sein.

Die Positionsverstellung des Ballastgewichts kann auch in Abhängigkeit vom Schwenkwinkel erfolgen, um den die Transporteinrichtung mit der zweiten Dreheinrichtung um die vertikale Achse gedreht wird.

Weiter vorzugsweise ist die Positionsverstellung des Ballastgewichts derart ausgebildet, dass eine Änderung des Aufstellwinkels des an der Transporteinrichtung gehaltenen Objekts und eine Veränderung der Schwerpunktkoordinaten bzw. der Position des Massenmittelpunkts des Ballastgewichts zeitgleich erfolgen. Wenn also der Aufstellwinkel vergrößert oder verkleinert wird, erfolgt zeitgleich oder unmittelbar daran anschließend eine Verstellung des Ballastgewichts zur Sicherstellung der Kippstabilität des Fahrzeugs.

Auch eine manuelle Steuerung der Positionsverstellung des Ballastgewichts ist grundsätzlich nicht ausgeschlossen. Insbesondere kann eine Korrektur der Schwerpunktlage des Ballastgewichts manuell bewirkt werden durch Eingriff in die Steuerung und/oder Regelung und/oder als nachträgliche Korrektur einer erfolgten Steuerung und/oder Regelung, insbesondere in Abhängigkeit von Fahrzeugniveau, weiter insbesondere in Abhängigkeit von Druckmesswerten von Hydraulik- oder Pneumatikkreisen von Achsausgleichssystemen von Achsbaugruppen des Transportfahrzeuges.

Um eine hohe Kipp- und Standsicherheit des erfindungsgemäßen Fahrzeugs zu jedem Zeitpunkt des Transports und Objekthandlings sicherzustellen, erfolgt bei einer Änderung des Aufstellwinkels des Objekts zunächst eine Positionsverstellung des Ballastgewichts, bevor eine Schwenkbewegung der Transporteinrichtung mit dem daran gehaltenen Objekt um die vertikale Achse erfolgen kann. In Abhängigkeit von dem Aufstellwinkel des an der Transporteinrichtung gehaltenen Objekts, insbesondere bei einer Änderung des Aufstellwinkels, erfolgt somit zunächst eine entsprechende Anpassung der Lage der Schwerpunktkoordinaten bzw. der Position des Massenmittelpunkts des Ballastgewichts in Abhängigkeit von den aktuellen Schwerpunktkoordinaten bzw. der aktuellen Position des Massenmittelpunkts des transportierten Objekts und erst anschließend wird das Objekt durch Schwenken der Transporteinrichtung seitlich ausgelenkt. Dies setzt eine entsprechende Steuerung der Verstelleinrichtung einerseits und der Dreheinrichtung zum Schwenken der Transporteinrichtung andererseits voraus.

Bei Straßenneigungen oder extremen Geländebedingungen kann sich das Fahrwerk von bekannten Transportfahrzeugen für Objekte mit Überlänge und somit auch das an der Transporteinrichtung des Fahrzeugs gehaltene Objekt zur Seite neigen. Bei Straßenneigungen können daher bekannte Transportfahrzeuge mit dem gehaltenen Objekt entgegengesetzt geneigt werden, um derart die Ladefläche seitlich zur Fahrtrichtung, also quer, stets waagrecht zu halten. Transportfahrzeuge mit Querneigeeinrichtungen dieser Art sind bereits bekannt, wobei Hydraulikzylinder unterhalb der Fahrwerksfläche einerseits an den Radachsen und andererseits an der Fahrwerksfläche von unten her angreifen können, um derart die gesamte Fahrwerksfläche mit der darauf aufliegenden Ladebrücke entsprechenden Neigungen im Straßenverlauf entgegengesetzt zu neigen. Weisen die Achsbaugruppen des Transportfahrzeugs einen Achsausgleich auf, welcher auch als "Niveauregulierung" bezeichnet werden kann, um eine Ladefläche des Transportfahrzeugs in einem horizontalen Zustand zu halten oder gegebenenfalls auch schrägstellen zu können, sind zur Realisierung eines entsprechenden Achsausgleichs in der Regel Achsbaugruppen mit hydraulisch betätigten Achsausgleichssystemen eingesetzt worden, welchen einen oder mehrere druckbeaufschlagte Hydraulikreise aufweisen und mit einem Betriebsfluid, wie einem Hydrauliköl, betrieben werden. Alternativ können auch pneumatisch betätigbare Kraftgeräte an den Achsbaugruppen realisiert seien, welche einen oder mehrere druckbeaufschlagte Pneumatikkreise aufweisen. Die Erfindung kann in diesem Zusammenhang vorzugsweise eine Positionsverstellung des Ballastgewichts in Abhängigkeit vom Fahrzeugniveau vorsehen, insbesondere auf Grundlage von Druckmesswerten von hydraulisch oder pneumatisch betätigten Achsausgleichsystemen, insbesondere von Achsbaugruppen des Transportfahrzeugs. Eine Steuerung und/oder Regelung der Positionsverstellung des Ballastgewichts kann dann in Abhängigkeit von dem Aufstellwinkel des an der Transporteinrichtung gehaltenen Objekts und/oder von dem Schwenkwinkel der Transporteinrichtung um eine vertikale Achse, insbesondere unter Berücksichtigung der Dimensionierung, Geometrie und/oder der Masse des Objekts, sowie unter weiterer Berücksichtigung von Druckmesswerten der Hydraulikkreise oder Pneumatikkreise erfolgen.

Bei einer besonders bevorzugten Ausführungsform ist eine Positionsverstellung des Ballastgewichts derart vorgesehen, dass die Schwerpunktlage des Transportfahrzeugs für jeden Aufstellwinkel des am Transportfahrzeug gehaltenen Objekts durch Verstellen des Ballastgewichts bzw. Änderung des Abstands des Ballastgewichts vom Schwerpunkt des Objekts in einen Bereich innerhalb der Stabilitätsgrenzen des Transportfahrzeugs verschoben wird, so dass eine hohe Kippsicherheit des Transportfahrzeugs, insbesondere zu den Seiten hin, gewährleistet ist.

Die Schwerpunktlage des Transportfahrzeugs ist hierbei bezogen auf den Transportzustand, wenn das Objekt an der Transporteinrichtung gehalten ist, und resultiert aus Masse und Masseverteilung des Objekts einerseits und Masse und Masseverteilung des unbeladenen Transportfahrzeugs mit allen Aufbauten und Ballastgewicht andererseits.

Achsbaugruppen des Transportfahrzeugs können hydraulisch und/oder pneumatisch anhebbar oder absenkbar und über Hydraulik- oder Pneumatikkreise verschaltet sein, so dass beispielsweise ein Stabilitätsdreieck oder ein Stabilitätsviereck gebildet wird. Die Hydraulik- oder Pneumatikkreise dienen zum gekoppelten Anheben oder Absenken der jeweils zu einem Hydraulik- oder Pneumatikkreis verschalteten Achsbaugruppen bzw. Radachsen des Transportfahrzeugs. Befindet sich die Schwerpunktlage des Transportfahrzeugs für jeden Aufstellwinkel des Objekts stets innerhalb des Stabilitätsdreiecks oder des Stabilitätsvierecks, ist Kippsicherheit des Fahrzeugs gewährleistet. Erfindungsgemäß kann somit das Ballastgewicht stets so verfahren bzw. verstellt werden, dass sich die resultierende Schwerpunktlage des Transportfahrzeugs stets innerhalb des durch die verschalteten Hydraulik- oder Pneumaktikkreise der Achsbaugruppen gebildeten Stabilitätsdreiecks bzw. Stabilitätsvierecks befindet.

Achsbaugruppen des Transportfahrzeugs am vorderen rechten, vorderen linken, hinteren rechten und/oder hinteren linken Teil des Fahrzeugs können über Hydraulik- oder Pneumatikkreise von Achsausgleichssystemen verschaltet sein. Bei einem Stabilitätsdreieck können Achsbaugruppen bzw. Radachsen des Fahrzeugs zu drei Hydraulikkreisen und bei einem Stabilitätsviereck können Achsbaugruppen bzw. Radachsen zu vier Hydraulikkreisen verschaltet sein. Es kann hierbei die Möglichkeit bestehen, Achsbaugruppen bzw. Radachsen bedarfsweise zu einem Stabilitätsdreieck oder zu einem Stabilitätsviereck zu verschalten.

Weiter vorzugsweise kann eine Positionsverstellung des Ballastgewichts derart vorgesehen sein, dass die Schwerpunktlage des Transportfahrzeugs mit dem an der Transporteinrichtung gehaltenen Objekt für jeden Aufstellwinkel des Objekts auf der vertikalen Drehachse oder benachbart zur vertikalen Drehachse der Transporteinrichtung liegt. Im Ergebnis wird das Ballastgewicht so verstellt, dass der Schwerpunkt des Transportfahrzeugs für jeden Neigungswinkel des Objekts auf der vertikalen Drehachse liegt oder im Bereich der vertikalen Drehachse der Transporteinrichtung liegt, wobei eine Abweichung der Schwerpunktlage von der Drehachse von weniger als 1 m, vorzugsweise weniger als 50 cm, erfindungsgemäß im Sinne des vorgenannten Bereichs liegen kann.

Die Verstelleinrichtung kann zum Verfahren oder Verschieben des Ballastgewichts ausgebildet sein. Die Verstellung des Ballastgewichts kann vorzugsweise stufenlos möglich sein, so dass entlang des Verstellwegs jede gewünschte Position des Ballastgewichts einstellbar ist. Aber auch eine diskontinuierliche Verstellmöglichkeit entlang des Verstellwegs ist nicht ausgeschlossen.

Zum Verfahren des Ballastgewichts entlang des Verstellwegs können Laufwagen vorgesehen sein, auf denen das Ballastgewicht abgestützt ist und deren Rollen auf Schienen ablaufen. Die Verstellung kann dann mittels Spindelführungen erfolgen.

Es ist konstruktiv vorgesehen und ermöglicht eine kompakte Bauweise des Transportfahrzeugs, dass die Verstelleinrichtung auf der Transporteinrichtung angeordnet bzw. montiert und zusammen mit der Transporteinrichtung relativ zur Ladeplatteform des Transportfahrzeugs um die vertikale Achse drehbar ist. Dies lässt es zu, die Transporteinrichtung mit der Verstelleinrichtung und dem Ballastgewicht als konstruktive Einheit auszubilden, die dann als separate Baueinheit auf die Ladeplattform des Transportfahrzeugs aufgestellt und an der Ladeplattform montiert werden kann. An der Transporteinrichtung lässt sich dann das zu transportierende Objekt halten und nach links oder nach rechts schwenken und vorzugsweise gleichzeitig das Ballastgewicht hin- oder herverfahren bzw. verschieben, um den Abstand der Lage des Schwerpunkts des Ballastgewichts von der Lage des Schwerpunkts des an der Transporteinrichtung gehaltenen Objekts zur Sicherstellung einer hohen Kippstabilität des Fahrzeugs zu verändern.

Um eine hohe Manövrierfähigkeit des erfindungsgemäßen Transportfahrzeugs zu gewährleisten, kann eine Drehbarkeit der Transporteinrichtung um die vertikale Achse um einen Schwenkwinkel von wenigstens +/- 90°, vorzugsweise von wenigstens +/- 180° oder mehr vorgesehen sein.

Um eine kompakte Bauweise sicherzustellen und einen möglichst geringen Abstand des Ballastgewichts von der vertikalen Drehachse der Transporteinrichtung einstellen zu können, ist die Geometrie bzw. sind die Abmessungen und Formgebung des Ballastgewichts an die Geometrie eines feststehenden Aufbaus der Transporteinrichtung angepasst. Das Ballastgewicht und die Bauteile, die den feststehenden Aufbau bilden, können eine komplementäre Geometrie aufweisen. Aufgrund der gewählten Geometrien kommt das Ballastgewicht gegen den feststehenden Aufbau des Fahrzeugs im Bereich der vertikalen Drehachse der Transporteinrichtung zur Anlage und/oder fährt in den Aufbau zumindest bereichsweise ein, wenn das Ballastgewicht einen minimalen Abstand zur Drehachse der Transporteinrichtung erreicht. Das Ballastgewicht kann einstückig oder mehrstückig ausgebildet sein und beispielsweise mehrere aufeinander stapelbare Scheibengewichte aufweisen, deren Grundfläche an die Grundflächenkontur des feststehenden Aufbaus der Transporteinrichtung angepasst sein kann.

Um zu verhindern, dass es zu einer ungewollten Änderung einer nach Vorgabe eines Steuerbefehls eines Fahrzeugführers eingestellten Drehstellung der Transporteinrichtung um die vertikale Achse kommt, kann eine Sicherungseinrichtung mit wenigstens einem Sicherungsmittel zur mechanischen Sicherung der zweiten Dreheinrichtung des Transportfahrzeuges in einer bestimmten Drehstellung vorgesehen sein. Das Sicherungsmittel kann insbesondere ausgeführt sein kann als ein die Drehung sperrender Rast- und/oder Sicherungsbolzen. Für eine Entsperrung des Sicherungsmittels kann die Übertragung eines Steuerbefehls an eine Steuerung der Sicherungseinrichtung vorgesehen sein, so dass zunächst mit einem ersten Steuerbefehl über die Sicherungseinrichtung die Entsperrung des Sicherungsmittels bewirkt wird, bevor mit einem Steuerbefehl über die zweite Dreheinrichtung eine gewünschte (andere) Drehstellung der Transporteinrichtung einstellbar ist. Der Fahrzeugführer des Transportfahrzeuges muss zunächst bewusst die Sperrung der Drehfunktion der Transporteinrichtung aufheben, um dann durch entsprechende Steuervorgaben ein seitliches Schwenken der Transporteinrichtung nach links oder nach rechts auslösen zu können.

Das Moment bzw. die Gewichtsbelastung des Objekts, insbesondere eines Rotorblatts einer Windkraftanlage, kann bis zu 350 Metertonnen betragen, beispielsweise 266 Metertonnen, bezogen auf ein Gewicht des Rotorblatts von 15,432 t und eine Länge von 17,31 m in Längserstreckung vom Rotorblattanfang bis zum Schwerpunkt. Die Rotorblattlänge kann beispielsweise 30 bis 70 m betragen.

Das Gewicht des Ballastgewichts kann vorzugsweise 10 bis 40 t betragen, weiter vorzugsweise reduzierbar/erhöhbar um einzelne Gewichtsscheiben. Der Verstellweg des Ballastgewichts kann zwischen null und fünf Metern betragen, beispielsweise bis 4,2 m. Der maximale Verstellweg des Ballastgewichts kann begrenzt sein, um den Schwenkradius der Transporteinrichtung bzw. der Hauptkonsole am Fahrzeug nicht zu groß werden zu lassen und damit Störkonturen zur Fahrumgebung so gering wie möglich zu halten.

Insbesondere sind der maximal mögliche Verstellweg und das Gewicht des Ballastgewichts so gewählt, dass bei einer gängigen Straßenbelastung durch eine Achslinie die Gewichtskraft nicht mehr als 10 bis 20 t, vorzugweise nicht mehr als 13 bis 15 t beträgt. Beispielsweise ergibt sich bei einem Transportfahrzeug mit einem Leergewicht (ohne Transporteinrichtung) von 50 t, einem Gewicht der Transporteinrichtung von 25 t, einem Ballastgewicht von 20 t und einem Rotorblattgewicht von 16 t eine Gesamtmasse von 111 t, was bei 8 Achsen zu einer Straßenbelastung von 13,9 t führt. Bei höheren Lasten müssen Fahrmodule mit mehr Achslinien verwendet werden.

Ein weiterer Aspekt der vorliegenden Erfindung betrifft ein Transportfahrzeug der eingangs genannten Art, wobei zur Lösung der oben beschriebenen Aufgabe vorgesehen ist, die Ladeplattform als Tiefbett auszubilden, wobei, vorzugsweise, ein Tiefbettmodul zwischen wenigstens zwei Fahrwerkmodulen des Transportfahrzeugs angeordnet ist. Durch Anordnung der Transporteinrichtung auf einem Tiefbett wird der Fahrzeugschwerpunkt in diesem Bereich nach unten verlagert und damit das Kipprisiko verringert.

Die Erfindung wird nachfolgend anhand der Zeichnung beispielhaft erläutert. In der Zeichnung zeigen
- Fig. 1: eine Seitenansicht eines erfindungsgemäßen Transportfahrzeugs mit einem an einer Transporteinrichtung des Transportfahrzeugs gehaltenen Rotorblatt bei schematischer Darstellung des Rotorblattes in einer horizontalen Transportposition und in einer aufgestellten Transportposition,
- Fig. 2: das in Fig. 1 gezeigte Transportfahrzeug in einer Draufsicht, wobei das Rotorblatt schematisch in einer achsparallelen Transportposition und in einer seitlich ausgeschwenkten Transportposition gezeigt ist,
- Fig. 3: eine schematische Darstellung des Transportfahrzeuges aus Fig. 1 von unten mit einem schematisch eingezeichneten dreieckförmigen Stabilitätsgrenzenbereich des Transportfahrzeugs, in dem Kippstabilität gewährleistet ist,
- Fig. 4: eine weitere Ausführungsform eines erfindungsgemäßen Transportfahrzeuges mit einer Verstelleinrichtung zur Positionsverstellung eines Ballastgewichts in einer Seitenansicht und
- Fig. 5: das Transportfahrzeug aus Fig. 4 in einer Ansicht von oben.

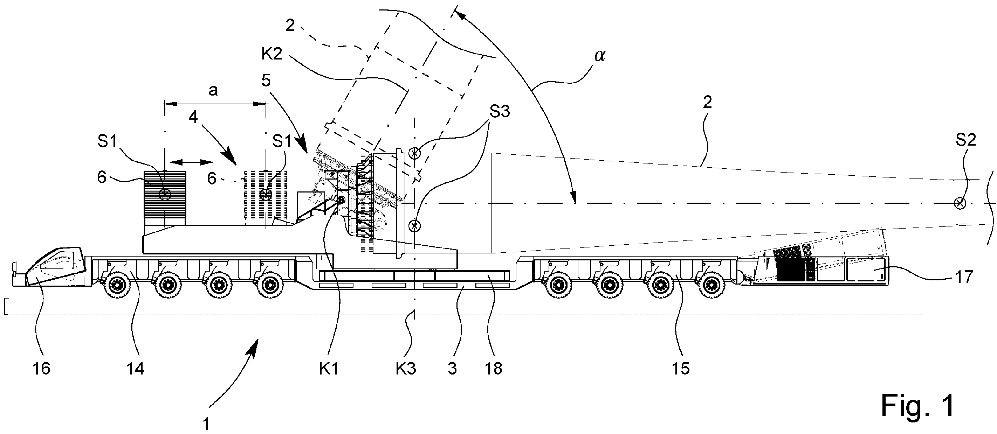

In Fig. 1 ist ein Transportfahrzeug 1 zum Transport eines länglichen Objekts 2 gezeigt, wobei es sich bei dem Objekt 2 um ein Rotorblatt einer Windturbine handelt. Auf einer Ladeplattform 3 ist eine Transporteinrichtung 4 mit einem Rotorblattadapter 5 zur Befestigung und Halterung des Objekts 2 während des Transports angeordnet. Es versteht sich, dass das Transportfahrzeug 1 auch zum Transport anderer länglicher Objekte mit Überlänge, beispielsweise von Turmsegmenten, ausgebildet sein kann.

Das Transportfahrzeug 1 weist eine erste nicht im Einzelnen gezeigte Dreheinrichtung auf, mit der es möglich ist, den Rotorblattadapter 5 nach oben zu schwenken, um das gehaltene Objekt 2 aufzustellen. Der Aufstellwinkel α kann bis zum 60° oder mehr betragen. Beim Aufstellen des Rotorblatts wird dieses zusammen mit dem Rotorblattadapter 5 um eine horizontale Achse K1 gedreht. Im Übrigen lässt die konstruktive Ausgestaltung der Transporteinrichtung 4 bzw. des Rotorblattadapters 5 eine Drehung des länglichen Objekts 2 um seine Längsachse K2 zu.

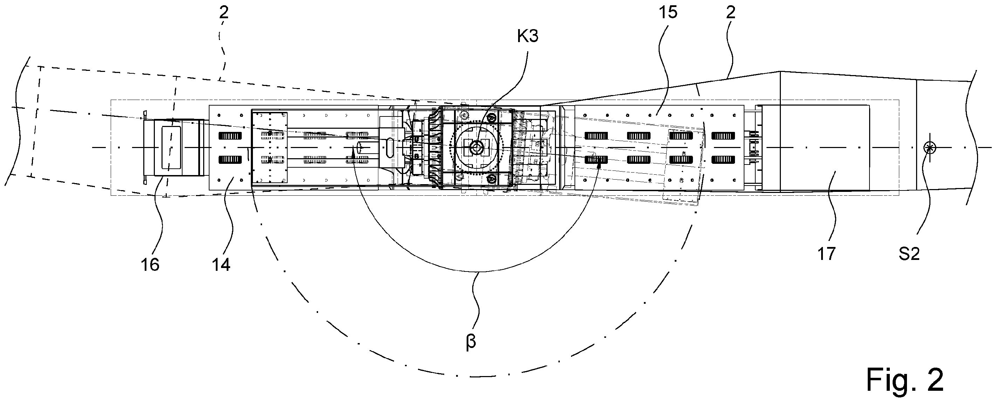

Die Transporteinrichtung 4 ist als Drehgestell ausgebildet und mit einer zweiten Dreheinrichtung um eine vertikale Drehachse K3 drehbar, so dass sich das Objekt 2 mit Bezug auf die Fahrzeuglängsseite nach links oder nach rechts schwenken lässt. Der Schwenkwinkel β (Fig. 2) kann bis zum +/- 185° betragen.

Durch die Möglichkeit, das Objekt 2 aus einer horizontalen Transportstellung in eine aufgestellte Transportstellung aufzurichten (Fig. 1) und die Möglichkeit, das Objekt 2 aus einer achsparallelen Transportstellung in eine seitlich ausgeschwenkte Transportstellung (Fig. 2) zu verschwenken, lässt sich das Transportfahrzeug 1 auch bei beengten Platz- bzw. Straßenbauverhältnissen leicht manövrieren, wobei das Objekt 2 mit der Transporteinrichtung 4 in einfacher Weise in eine optimale Manövrierstellung mit an die Umfahrung von Hindernissen angepasstem Aufstellwinkel α und/oder seitlichem Schwenkwinkel β gebracht werden kann.

Ein entsprechendes Transportfahrzeug 1 mit einem ähnlichen funktionalen und konstruktiven Aufbau ist aus der JP 2013-071511 A bekannt. Aus der vorgenannten Veröffentlichung ist bereits eine mit einer Ladeplattform des bekannten Transportfahrzeugs verbundene Transporteinrichtung, ausgebildet als Drehgestell, zur Halterung von Rotorblättern während des Transports bekannt, wobei die Transporteinrichtung einen Rotorblattadapter aufweist und das Aufstellen und seitliche Verschwenken des Rotorblatts sowie die Drehung des Rotorblatts um seine Längsachse zulässt.

Das nachfolgend weiter anhand der Zeichnung beschriebene Transportfahrzeug 1 weist ein Ballastgewicht 6 auf, das mit einer in den Figuren 1 bis 3 nicht im Einzelnen gezeigten Verstelleinrichtung relativ zu dem an der Transporteinrichtung 4 gehaltenen Objekt 2 bzw. zur Drehachse K3 der Transporteinrichtung 4 verfahrbar oder verschiebbar ist. Die Verstelleinrichtung ist auf der Transporteinrichtung 4 angeordnet und zusammen mit der Transporteinrichtung 4 um die vertikale Drehachse K3 drehbar. Dementsprechend lässt sich auch das Ballastgewicht 6 zusammen mit der Transporteinrichtung 4 seitlich verschwenken.

Das Ballastgewicht 6 besteht in an sich bekannter Weise aus einer Mehrzahl von scheibenförmigen Gewichtskörpern, die aufeinander angeordnet und miteinander befestigt sind.

Zur Steuerung der Positionsverstellung des Ballastgewichts 6 ist eine nicht im Einzelnen gezeigte Steuerungseinrichtung vorgesehen. Das Verstellen des Ballastgewichts 6 erfolgt in Abhängigkeit vom Aufstellwinkel α des Objekts 2. Durch die Verstellung des Ballastgewichts 6 kommt es zu einer Veränderung der Schwerpunktkoordinaten bzw. der Position des Massenmittelpunkts S1 des Ballastgewichts 6 relativ zu den Schwerpunktkoordinaten bzw. der Position des Massenmittelpunkts S2 des an der Transporteinrichtung 4 gehaltenen Objekts 2. Fig. 1 zeigt, dass das Ballastgewicht 6 beim Transport des Objekts 2 in der horizontalen Transportstellung einen maximalen horizontalen Abstand zur Drehachse K3 bzw. zum Massenmittelpunkt S2 des Objekts 2 aufweist. In der ebenfalls in Fig. 1 gezeigten aufgestellten Transportstellung des Objekts 2 ist das Ballastgewicht 6 mit einem verringerten Abstand angeordnet und befindet sich somit weniger weit beabstandet von der vertikalen Drehachse K3 der Transporteinrichtung 4. Der maximale Verstellweg a des Ballastgewichts 6 zwischen einer am weitesten von der vertikalen Drehachse K3 der Transporteinrichtung 4 beabstandeten Position und einer der vertikalen Drehachse K3 nächstliegenden Endposition kann im Bereich zwischen 2 und 5 m, vorzugweise im Bereich zwischen 3,5 und 4,5 m, liegen.

Mit wachsendem Aufstellwinkel α verschiebt sich die Lage des Massenmittelpunktes S2 des Objekts 2 in Richtung zur vertikalen Drehachse K3 der Transporteinrichtung 4, so dass entsprechend das Ballastgewicht 6 beim Aufstellen des Objekts 2 ebenfalls in Richtung zur vertikalen Drehachse K3 verstellt wird. Die Steuerung der Positionsverstellung des Ballastgewichts 6 erfolgt somit in Abhängigkeit vom Aufstellwinkel α des Objekts 2, wobei, vorzugsweise, die Verstellung des Ballastgewichts 6 zeitgleich mit einer durch die Steuerung vorgegebenen Änderung des Aufstellwinkels α vorgesehen sein kann.

Die Masse des Ballastgewichts 6 kann in Abhängigkeit von der Masse und Geometrie des Objekts 2 beispielsweise zwischen 10 und 45 t betragen, vorzugsweise zwischen 10 und 30 t. Das Objekt 2 kann beispielsweise ein Gewicht zwischen 10 und 20 t aufweisen.

Die Steuerung der Positionsverstellung des Ballastgewichts 6 erfolgt vorzugsweise automatisch in Abhängigkeit vom Aufstellwinkel α des Objekts 2, weiter vorzugsweise zeitgleich. Bei einer Änderung des Aufstellwinkels α ist zunächst eine Positionsverstellung des Ballastgewichts 6 vorgesehen, um die Schwerpunktkoordinaten bzw. die Position des Massenmittelpunkts S1 des Ballastgewichts 6 an die mit geändertem Aufstellwinkel α geänderten Schwerpunktkoordinaten bzw. die geänderte Position des Massenmittelpunkts S2 des Objekts 2 anzupassen. Nach einem erfolgen Massenausgleich kann dann eine Schwenkbewegung der Transporteinrichtung 4 um einen entsprechenden Schwenkwinkel β erfolgen.

Besonders bevorzugt ist eine Positionsverstellung des Ballastgewichts 6 derart vorgesehen, dass der Schwerpunkt S3 des Transportfahrzeugs 1 mit dem an der Transporteinrichtung 4 gehaltenen Objekt 2 für jeden Aufstellwinkel α des Objekts 2 auf der vertikalen Drehachse K3 der Transporteinrichtung 4 liegt. Dies ist in Fig. 1 schematisch dargestellt.

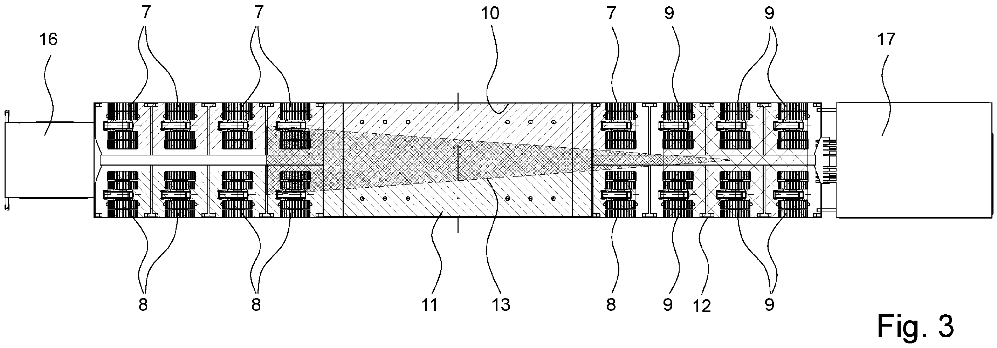

Wie sich aus Fig. 3 ergibt, können die Fahrzeugräder tragenden Achsbaugruppen 7, 8, 9 des Transportfahrzeugs 1 hydraulisch anhebbar oder absenkbar und Hydraulickreise 10, 11, 12 zu einem Stabilitätsdreieck 13 verschaltet sein. Die Positionsverstellung des Ballastgewichts 6 erfolgt derart, dass sich der Gesamtschwerpunkt S3 des Transportfahrzeugs 1 für jeden Aufstellwinkel α des Objekts 2 innerhalb des Stabilitätsdreiecks 13 befindet. Damit wird eine Kippsicherheit des Transportfahrzeugs 1 bei seitlichem Ausschwenken des Objekts 2 gewährleistet.

Bei der gezeigten Ausführungsform sind beispielsweise die vier vorderen, in Fahrzeughauptfahrtrichtung rechts liegenden Achsbaugruppen 7 und die erste hintere, rechte Achsbaugruppe 7 über einen ersten Hydraulikkreis 10 miteinander verschaltet. Ein weitere Hydraulikkreis 11 verschaltet die vier vorderen, linken Achsbaugruppen 8 mit der ersten linken, hinteren Achsbaugruppe 8. Die drei letzten, hinteren Achsbaugruppen 9 auf der rechten und auf der linken Fahrzeugseite sind über den dritten Hydraulikkreis 12 miteinander verschaltet. Die Begriffe "vorne" und "hinten" beziehen sich auf die Lage der Achsbaugruppen 7, 8, 9 relativ zur Ladeplattform 3, unter Bezug auf die Darstellung des Transportfahrzeugs 1 gemäß Fig. 3 somit auf die Lage links ("vorne") und rechts ("hinten") von der Ladeplattform 3.

Durch eine Änderung der Hydraulikverschaltung kann auch ein Stabilitätsviereck gebildet sein, wobei dann vorgesehen sein kann, dass durch geeignete Positionsverstellung des Ballastgewichts 6 in Abhängigkeit vom Aufstellwinkel α des Objekts 2 die Schwerpunktlage des Transportfahrzeuges 1, einschließlich des an der Transporteinrichtung 4 des Transportfahrzeugs 1 gehaltenen Objekts 2, innerhalb des Stabilitätsvierecks liegt.

Wie sich weiter aus Fig. 1 ergibt, kann die Ladeplattform 3 als Tiefbettmodul ausgebildet sein, das zwischen zwei Fahrmodulen 14, 15 des Transportfahrzeuges 1 angeordnet ist. Durch die Ausbildung der Ladeplattform 3 als Tiefbett wird der Schwerpunkt des Transportfahrzeugs 1 nach unten verlagert, was zu einer höheren Kippstabilität des Transportfahrzeuges 1 beiträgt.

Am vorderen Ende des Fahrmoduls 14 befindet sich eine Fahrerkabine 16 und am hinteren Teil des Transportfahrzeuges 1 eine Antriebseinheit 17.

Auf die Ladeplattform 3 ist eine Grundplatte 18 der Transporteinrichtung 4 montiert. Die Transporteinrichtung 4 steht mit der Grundplatte 18 auf der Ladeplattform 3 auf.

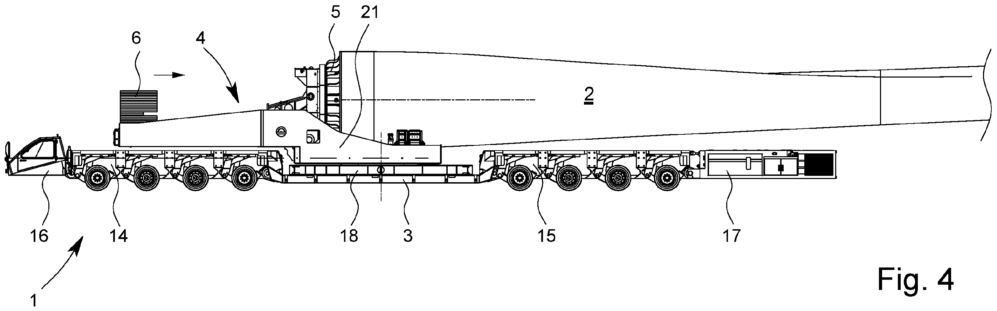

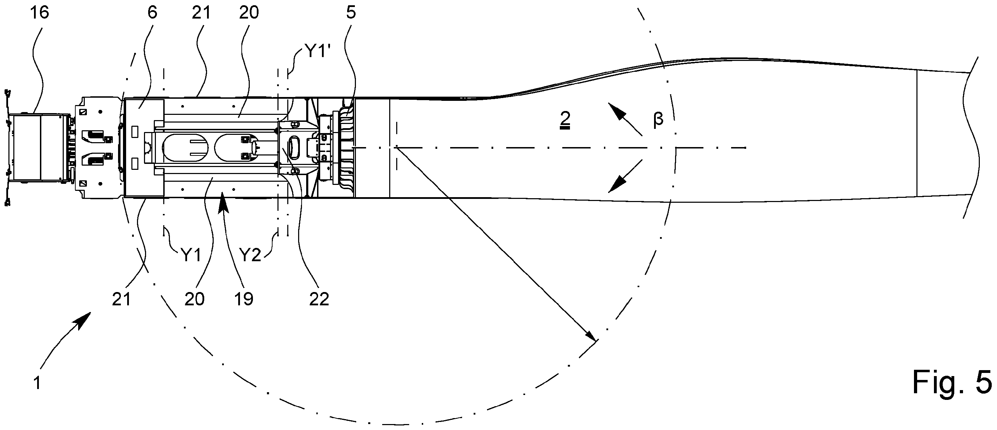

Anhand der Fign. 4 und 5 wird in einer Seitenansicht (Fig. 4) und in einer Draufsicht (Fig. 5) eine Verstelleinrichtung 19 zur Verstellung eines Ballastgewichts 6 beschrieben. Gleiche Bauteile der in den Fig. 1 bis 5 gezeigten Ausführungsformen sind mit gleichen Bezugszeichen gekennzeichnet.

Die Verstelleinrichtung 19 ist für eine schienengeführte Verstellung des Ballastgewichts 6 ausgebildet. Hierzu sind zwei Schienen 20 vorgesehen, auf denen das Ballastgewicht 6 über nicht gezeigte Laufwagen mit Rollen verfahrbar geführt ist. Für die Bewegung des Ballastgewichts 6 entlang der Führungsschienen 20 ist ein Spindelantrieb vorgesehen. Die Linearverstellung des Ballastgewichts 6 erfolgt über Gewindespindeln. Damit ist eine kontinuierliche Distanzverstellung des Ballastgewichts relativ zur vertikalen Drehachse K3 der Transporteinrichtung 4 möglich.

Die Transporteinrichtung 4 weist einen gestellartigen Aufbau mit zwei Seitenwangen 21 auf, zwischen denen das Ballastgewicht 6 in Längsrichtung des Transportfahrzeugs 1 verstellbar geführt ist.

Die Geometrie des Ballastgewichts 6 ist an die Geometrie eines feststehenden Aufbaus 22 der Transporteinrichtung 4 angepasst, so dass das Ballastgewicht 6 gegen den Aufbau 22 zur Anlage kommt und/oder in den Aufbau 22 zumindest bereichsweise einfährt, wenn sich das Ballastgewicht 6 dem Rotorblattadapter 5 weitestmöglich annähert. Dadurch wird ein größtmöglicher Verstellweg des Ballastgewichts 6 realisiert.

Mit Bezug auf die Draufsicht gemäß Fig. 5 kann beispielsweise vorgesehen sein, dass die Konturlinie des Ballastgewichts 6 im mittleren Bereich auf der dem feststehenden Aufbau 22 zugewandten Seite einen Rücksprung bzw. eine Ausnehmung aufweist, die an einen entsprechenden Vorsprung im mittleren Bereich der Konturlinie des Aufbaus 22 angepasst ist.

**In** der Draufsicht können die Geometrien so gewählt sein, dass beim Verstellen des Ballastgewichts 6 in Richtung zum feststehenden Aufbau 22 eine quer zur Längsachse des Transportfahrzeugs 1 verlaufende Begrenzungsebene Y1 des Ballastgewichts 6, die an die Grundfläche des Ballastgewichts 6 gelegt ist, eine Begrenzungsebene Y2, die an den feststehenden Aufbau 22 gelegt ist, passiert und bei Erreichen des minimalen Abstands des Ballastgewichts 6 zum Rotorblattadapter 5 dann hinter der Begrenzungsebene Y2 des feststehenden Aufbaus 22 verläuft. Dies ist in Fig. 5 schematisch durch die Begrenzungsebene Y1' gezeigt.

### Bezugszeichenliste:

- 1: Transportfahrzeug
- 2: Objekt
- 3: Ladeplattform
- 4: Transporteinrichtung
- 5: Rotorblattadapter
- 6: Ballastgewicht
- 7: Achsbaugruppe
- 8: Achsbaugruppe
- 9: Achsbaugruppe
- 10: Hydraulikkreis
- 11: Hydraulikkreis
- 12: Hydraulikkreis
- 13: Stabilitätsdreieck
- 14: Fahrmodul
- 15: Fahrmodul
- 16: Fahrerkabine
- 17: Antriebseinheit
- 18: Grundplatte
- 19: Verstelleinrichtung
- 20: Schiene
- 21: Seitenwange
- 22: Aufbau

## Patentansprüche

1. Transportfahrzeug (1) für ein längliches Objekt (2) mit Überlänge, insbesondere für ein Rotorblatt einer Windturbine oder ein Turmsegment, mit einem auf einer Ladeplattform (3) des Transportfahrzeugs (1) angeordneten Transporteinrichtung (4) zur Halterung des Objekts (2) während des Transports, mit einer ersten Dreheinrichtung zur Änderung des Aufstellwinkels des an der Transporteinrichtung (4) gehaltenen Objekts (2) und mit einer zweiten Dreheinrichtung zum Schwenken der Transporteinrichtung (4) um eine vertikale Achse, wobei wenigstens ein verstellbares Ballastgewicht (6) und eine Verstelleinrichtung (19) zur Positionsverstellung des Ballastgewichts (6) vorgesehen sind und wobei die Verstelleinrichtung (19) auf der Transporteinrichtung (4) angeordnet und zusammen mit der Transporteinrichtung (4) drehbar ist, **dadurch gekennzeichnet, dass** die Geometrie des Ballastgewichts (6) an die Geometrie eines feststehenden Aufbaus (22) der Transporteinrichtung (4) derart angepasst ist, dass das Ballastgewicht (6) bei Erreichen eines Mindestabstands zur vertikalen Drehachse der Transporteinrichtung (4) gegen den Aufbau (22) zur Anlage kommt.

2. Transportfahrzeug (1) für ein längliches Objekt (2) mit Überlänge, insbesondere für ein Rotorblatt einer Windturbine oder ein Turmsegment, mit einem auf einer Ladeplattform (3) des Transportfahrzeugs (1) angeordneten Transporteinrichtung (4) zur Halterung des Objekts (2) während des Transports, mit einer ersten Dreheinrichtung zur Änderung des Aufstellwinkels des an der Transporteinrichtung (4) gehaltenen Objekts (2) und mit einer zweiten Dreheinrichtung zum Schwenken der Transporteinrichtung (4) um eine vertikale Achse, wobei wenigstens ein verstellbares Ballastgewicht (6) und eine Verstelleinrichtung (19) zur Positionsverstellung des Ballastgewichts (6) vorgesehen sind und wobei die Verstelleinrichtung (19) auf der Transporteinrichtung (4) angeordnet und zusammen mit der Transporteinrichtung (4) drehbar ist, **dadurch gekennzeichnet, dass** die Geometrie des Ballastgewichts (6) an die Geometrie eines feststehenden Aufbaus (22) der Transporteinrichtung (4) derart angepasst ist, dass das Ballastgewicht (6) bei Erreichen eines Mindestabstands zur vertikalen Drehachse der Transporteinrichtung (4) in den Aufbau (22) zumindest bereichsweise einfährt.

3. Transportfahrzeug nach Anspruch 1 oder 2, **dadurch gekennzeichnet, dass** eine Steuereinrichtung zur automatischen Steuerung der Positionsverstellung des Ballastgewichts (6) vorgesehen ist.

4. Transportfahrzeug nach einem der vorhergehenden Ansprüche, **dadurch gekennzeichnet, dass** eine Positionsverstellung des Ballastgewichts (6) in Abhängigkeit vom Aufstellwinkel des Objekts (2) und, vorzugsweise, vom Drehwinkel der Transporteinrichtung (4) um die vertikale Achse vorgesehen ist.

5. Transportfahrzeug nach einem der vorhergehenden Ansprüche, **dadurch gekennzeichnet, dass** eine Positionsverstellung des Ballastgewichts (6) derart vorgesehen ist, dass bei einer Änderung des Aufstellwinkels des Objekts (2) zunächst eine Positionsverstellung des Ballastgewichts (6) und nachfolgend eine Schwenkbewegung der Transporteinrichtung (4) um die vertikale Achse erfolgt.

6. Transportfahrzeug nach einem der vorhergehenden Ansprüche, **dadurch gekennzeichnet, dass** eine Positionsverstellung des Ballastgewichts (6) derart vorgesehen ist, dass die resultierende Schwerpunktlage des Transportfahrzeugs (1) für jeden Aufstellwinkel des Objekts (2) in einen Bereich innerhalb der Kippstabilitätsgrenzen des Transportfahrzeugs (1) verschoben wird.

7. Transportfahrzeug nach einem der vorhergehenden Ansprüche, **dadurch gekennzeichnet, dass** eine Positionsverstellung des Ballastgewichts (6) derart vorgesehen ist, dass die resultierende Schwerpunktlage des Transportfahrzeugs (1) für jeden Aufstellwinkel des Objekts (2) auf der vertikalen Drehachse der Transporteinrichtung (4) liegt.

8. Transportfahrzeug nach einem der vorhergehenden Ansprüche, **dadurch gekennzeichnet, dass** die Verstelleinrichtung (19) zum Verfahren oder Verschieben des Ballastgewichts (6) ausgebildet ist.

9. Transportfahrzeug nach einem der vorhergehenden Ansprüche, **dadurch gekennzeichnet, dass** eine Sicherungseinrichtung mit wenigstens einem Sicherungsmittel zur mechanischen Sicherung der Transporteinrichtung (4) in einer bestimmten Drehstellung gegen ungewollte Drehung um die vertikale Achse vorgesehen ist, insbesondere wobei das Sicherungsmittel ausgeführt ist als ein die Drehung sperrender Rast- und/oder Sicherungsbolzen.

10. Transportfahrzeug (1) nach einem der vorhergehenden Ansprüche, **dadurch gekennzeichnet, dass** die Ladeplattform (3) als Tiefbett ausgebildet ist.

## Claims

1. Transport vehicle (1) for an elongated object (2) with excess length, in particular for a rotor blade of a wind turbine or a tower segment, with a transport device (4) arranged on a loading platform (3) of the transport vehicle (1) for holding the object (2) during transport, with a first rotary device for changing the angle of installation of the object (2) held on the transport device (4) and with a second rotary device for pivoting the transport device (4) about a vertical axis, wherein at least one adjustable ballast weight (6) and an adjusting device (19) for adjusting the position of the ballast weight (6) are provided and wherein the adjusting device (19) is arranged on the transport device (4) and can be rotated together with the transport device (4), **characterised in that** the geometry of the ballast weight (6) is adapted to the geometry of a fixed structure (22) of the transport device (4) in such a way that the ballast weight (6) comes to bear against the structure (22) when a minimum distance from the vertical axis of rotation of the transport device (4) is reached.

2. Transport vehicle (1) for an elongated object (2) with excess length, in particular for a rotor blade of a wind turbine or a tower segment, with a transport device (4) arranged on a loading platform (3) of the transport vehicle (1) for holding the object (2) during transport, with a first rotary device for changing the angle of installation of the object (2) held on the transport device (4) and with a second rotary device for pivoting the transport device (4) about a vertical axis, wherein at least one adjustable ballast weight (6) and an adjusting device (19) for adjusting the position of the ballast weight (6) are provided and wherein the adjusting device (19) is arranged on the transport device (4) and can be rotated together with the transport device (4), **characterised in that** the geometry of the ballast weight (6) is adapted to the geometry of a fixed structure (22) of the transport device (4) in such a way that the ballast weight (6) enters the structure (22) at least in regions when a minimum distance from the vertical axis of rotation of the transport device (4) is reached.

3. Transport vehicle according to claim 1 or 2, **characterised in that** a control device is provided for automatically controlling the position adjustment of the ballast weight (6).

4. Transport vehicle according to one of the preceding claims, **characterised in that** a position adjustment of the ballast weight (6) is provided as a function of the angle of installation of the object (2) and, preferably, of the angle of rotation of the transport device (4) about the vertical axis.

5. Transport vehicle according to one of the preceding claims, **characterised in that** a position adjustment of the ballast weight (6) is provided in such a way that, when the angle of installation of the object (2) is changed, firstly a position adjustment of the ballast weight (6) and subsequently a pivoting movement of the transport device (4) about the vertical axis takes place.

6. Transport vehicle according to one of the preceding claims, **characterised in that** a position adjustment of the ballast weight (6) is provided in such a way that the resulting centre of gravity position of the transport vehicle (1) is displaced for each angle of installation of the object (2) into a range within the tilt stability limits of the transport vehicle (1).

7. Transport vehicle according to one of the preceding claims, **characterised in that** a position adjustment of the ballast weight (6) is provided in such a way that the resulting centre of gravity position of the transport vehicle (1) lies on the vertical axis of rotation of the transport device (4) for each angle of installation of the object (2).

8. Transport vehicle according to one of the preceding claims, **characterised in that** the adjusting device (19) is designed to move or displace the ballast weight (6).

9. Transport vehicle according to one of the preceding claims, **characterised in that** a securing device with at least one securing means is provided for mechanically securing the transport device (4) in a certain rotational position against unwanted rotation about the vertical axis, in particular wherein the securing means is designed as a latching and/or securing bolt which blocks the rotation.

10. Transport vehicle (1) according to one of the preceding claims, **characterised in that** the loading platform (3) is designed as a low-bed.

## Revendications

1. Véhicule de transport (1) pour un objet allongé (2) de surlongueur, en particulier pour une pale de rotor d'une éolienne ou un segment de tour, comprenant un dispositif de transport (4) disposé sur une plateforme de chargement (3) du véhicule de transport (1) pour maintenir l'objet (2) pendant le transport, comprenant un premier dispositif de rotation pour modifier l'angle de pose de l'objet (2) maintenu sur le dispositif de transport (4) et comprenant un deuxième dispositif de rotation pour faire pivoter le dispositif de transport (4) autour d'un axe vertical, au moins un poids de lestage réglable (6) et un dispositif de réglage (19) pour régler la position du poids de lestage (6) étant prévus et le dispositif de réglage (19) étant disposé sur le dispositif de transport (4) et pouvant tourner conjointement avec le dispositif de transport (4), **caractérisé en ce que** la géométrie du poids de lestage (6) est adaptée à la géométrie d'une structure fixe (22) du dispositif de transport (4) de telle sorte que le poids de lestage (6) vient en appui contre la structure (22) lorsqu'une distance minimale par rapport à l'axe de rotation vertical du dispositif de transport (4) est atteinte.

2. Véhicule de transport (1) pour un objet allongé (2) de surlongueur, en particulier pour une pale de rotor d'une éolienne ou un segment de tour, comprenant un dispositif de transport (4) disposé sur une plateforme de chargement (3) du véhicule de transport (1) pour maintenir l'objet (2) pendant le transport, comprenant un premier dispositif de rotation pour modifier l'angle de pose de l'objet (2) maintenu sur le dispositif de transport (4) et comprenant un deuxième dispositif de rotation pour faire pivoter le dispositif de transport (4) autour d'un axe vertical, au moins un poids de lestage réglable (6) et un dispositif de réglage (19) pour régler la position du poids de lestage (6) étant prévus et le dispositif de réglage (19) étant disposé sur le dispositif de transport (4) et pouvant tourner conjointement avec le dispositif de transport (4), **caractérisé en ce que** la géométrie du poids de lestage (6) est adaptée à la géométrie d'une structure fixe (22) du dispositif de transport (4) de telle sorte que le poids de lestage (6) rentre au moins en partie dans la structure (22) lorsqu'une distance minimale par rapport à l'axe de rotation vertical du dispositif de transport (4) est atteinte.

3. Véhicule de transport selon la revendication 1 ou 2, **caractérisé en ce qu'**un dispositif de commande est prévu pour commander automatiquement le réglage de la position du poids de lestage (6).

4. Véhicule de transport selon l'une quelconque des revendications précédentes, **caractérisé en ce qu'**un réglage de la position du poids de lestage (6) est prévu en fonction de l'angle de pose de l'objet (2) et, de préférence, de l'angle de rotation du dispositif de transport (4) autour de l'axe vertical.

5. Véhicule de transport selon l'une quelconque des revendications précédentes, **caractérisé en ce qu'**un réglage de la position du poids de lestage (6) est prévu de telle sorte que lors d'une modification de l'angle de pose de l'objet (2), d'abord un réglage de la position du poids de lestage (6) et ensuite un mouvement de pivotement du dispositif de transport (4) autour de l'axe vertical ont lieu.

6. Véhicule de transport selon l'une quelconque des revendications précédentes, **caractérisé en ce qu'**un réglage de la position du poids de lestage (6) est prévu de telle sorte que la position de centre de gravité résultante du véhicule de transport (1) pour chaque angle de pose de l'objet (2) est déplacée dans une plage à l'intérieur des limites de stabilité de basculement du véhicule de transport (1).

7. Véhicule de transport selon l'une quelconque des revendications précédentes, **caractérisé en ce qu'**un réglage de la position du poids de lestage (6) est prévu de telle sorte que la position de centre de gravité résultante du véhicule de transport (1) pour chaque angle de pose de l'objet (2) se situe sur l'axe de rotation vertical du dispositif de transport (4).

8. Véhicule de transport selon l'une quelconque des revendications précédentes, **caractérisé en ce que** le dispositif de réglage (19) est réalisé pour déplacer ou déplacer le poids de lestage (6).

9. Véhicule de transport selon l'une quelconque des revendications précédentes, **caractérisé en ce qu'**un dispositif de blocage avec au moins un moyen de blocage est prévu pour bloquer mécaniquement le dispositif de transport (4) dans une position de rotation déterminée contre une rotation involontaire autour de l'axe vertical, en particulier le moyen de blocage étant réalisé sous forme de boulon d'encliquetage et/ou de blocage bloquant la rotation.

10. Véhicule de transport (1) selon l'une quelconque des revendications précédentes, **caractérisé en ce que** la plateforme de chargement (3) est réalisée sous forme de lit profond.
